# EUROPEAN PATENT APPLICATION

(11) **EP 2 423 865 A1**
(43) Date of publication of application: **29.02.2012**
(21) Application number: 11250742.1
(22) Date of filing: 25.08.2011
(51) Int. Cl.: G06Q 10/00

(54) **Multiple address verification system for delivery routing**

(30) Priority: 26.08.2010 US 377357 P
(71) Applicant: RAF Technology, Inc., Redmond, WA 98052 (US)
(72) Inventor: Ross, David Justin, Redmond, WA 98052 (US); Harbachuk, George, Redmond, WA 98052 (US)
(74) Representative: Brinck, David John Borchardt

(57) **Abstract**

The present disclosure pertains to assembling many different ways of designating an address (Source Databases A,B,C) into a single, canonical form (Canonical Database, Fig. 2) and using that canonical form to route the item for delivery (process Fig. 3). The present disclosure deals with systems where the problem presented is that there is either no "proper" address or a plurality of them (e.g. different addresses for different mailers for the same house) (Fig. 1). Preferably, a meta-database (Fig. 5) links across the multiple source databases (A,B,C) and logically connects their contents to the canonical address database, wherein each delivery location has a single associated canonical address designator (532), and each address designator in each source database (536, 538) that refers to that delivery point is linked by the meta-database to that associated canonical designator. Tags (540, 542) may be added to the meta-database entries for accessing the corresponding source databases to update the data.

## Description

### Related Applications

This application claims priority to U.S. Provisional Application No. 61/377,357 filed August 26, 2010 and incorporated herein by this reference.

### Technical Field

This invention pertains to methods and apparatus for building and using electronic meta-databases to support physical delivery of items to destinations described by multiple, non-canonical address designators.

### Background of the Invention

Summary of the Disclosure

The following is a summary of the present disclosure in order to provide a basic understanding of some aspects of the invention. This summary is not intended to identify key/critical elements of the invention or to delineate the scope of the invention. Its sole purpose is to present some concepts of the invention in a simplified form as a prelude to the more detailed description that is presented later.

The present disclosure, in one aspect, pertains to assembling several different ways of designating an address into a single, canonical form and using that canonical form to route an item, such as a mail piece or parcel for delivery. It is distinct from the idea that there may be different incorrect ways of designating an address (e.g. errors made in addressing and vanity addresses) which nonetheless need to be corrected to route the mail. The present disclosure deals with systems where the problem presented is that there is either no "proper" address or a plurality of them (e.g. different addresses for different mailers for the same house).

Additional aspects and advantages of this invention will be apparent from the following detailed description of preferred embodiments, which proceeds with reference to the accompanying drawings.

### Brief Description of the Drawings

Fig. 1 is an illustration of a dwelling that has multiple different address designators associated with it, at least some of the address designators posted on placards on the front of the building.

Fig. 2 is a simplified functional block diagram of a novel directory system in accordance with an embodiment of the present disclosure.

Fig. 3 illustrates a process consistent with the present invention for assigning a canonical form of address to a mail piece to facilitate delivery.

Fig. 4 is a simplified flow diagram illustrating an example of a process for linking across multiple data suppliers' address designator data to associate a single canonical address designator to each delivery point.

Fig. 5 is an example of a data structure in accordance with an embodiment of the present disclosure.

### Detailed Description of Preferred Embodiments

The need for improvements stems from the fact that until recently there has been no pressing reason to end the multiple overlapping addressing schemes used in many countries or to use them all at once to determine where an item should be delivered, but now there is. No existing directory approach starts with multiple, unrelated designators for delivery points and creates a uniform system regardless of which designator occurs on the item to be delivered. It enables a courier familiar with one addressing scheme to deliver a package correctly when it contains an address in another scheme.

To illustrate, in many countries (Colombia and Costa Rica are excellent examples) there is no unique address designator for a person or a domicile. This situation was relatively common in rural America as well until the introduction of 9-1-1 addressing.

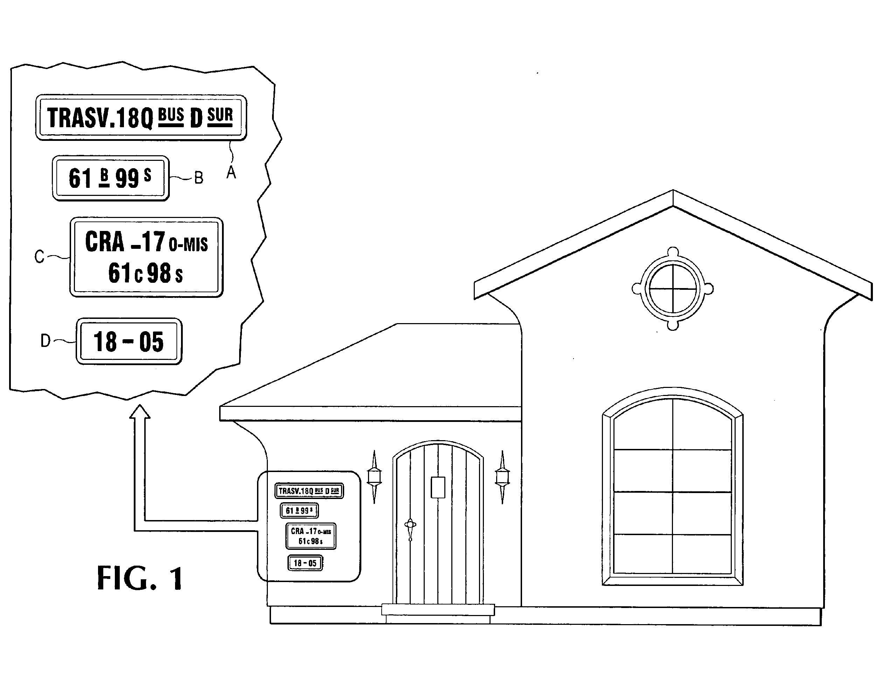

A single house may have many address designators, each used by a different organization. The government may use one, the telephone company another, the electricity yet another, the courier service another, and so on. Figure 1 shows an example from Colombia, only slightly more perverse than the norm. This house has four addresses. Your inventor has seen as many as eight.

It is important to note that this is NOT the case where one address is "correct" and the others wrong. All these addresses are "correct" as far as the courier for that company or entity is concerned. It is much like the case used to be in this country where each automobile club labeled each small highway with its own designation, so one highway would have many "correct" numbers associated with it.

In Costa Rica, the situation has been considerably worse than this Colombian example. Until the current Costa Rican Postal Service's initiative to name the streets in the country and assign unique address designators to each domicile (a project not yet completed), every house in the major urban areas had a different address designator for each department store, each utility, the Postal Service, the tax service, and so on. Indeed, if there were multiple adults living in the same house (even husband and wife), each of those people might have a different address designator for each of the above organizations.

To make the problem in Costa Rica even more difficult, unlike Colombia the "designators" in Costa Rica addresses are usually the Spanish equivalent of "go 200 meters past the Church of the Assumption and turn left at the house under construction. At the fourth house on the left, behind the white meter-high wall, deliver to the second entrance". That is, they are directions, usually starting from some central point, for the courier making the delivery. Other countries have a variety of different address designators that are similarly unwieldy.

Throughout the present disclosure, we will generally refer to a "database" or more specifically a "source database" to mean the address designator data of one data supplier (or possibly an affiliated group of data suppliers). We describe below a "meta-database" system that links across the multiple databases to associate a single canonical address designator to each delivery point, and that links that canonical designator to each address designator for that delivery point in each source database. We will use "directory" to mean a system that is thereby created for use in routing the package or whatever. In a preferred embodiment, the directory can be used in real time.

The inventive concept can also be applied to the case where there are several different ways within a company's mailing list of listing the same address, and where there is also a canonical (in this case, the official USPS) form of the address. In other words, various forms of address designators appear within a single database for the same physical location (dwelling, office, etc.). One feature of the present disclosure can be used to automatically associate or link these various forms, or address designators, to the corresponding canonical form. The canonical form can be used to reduce errors and enable more efficient processing and delivery.

Referring now to Figure 1, the front of a dwelling is shown in an area where there are multiple services (couriers, utilities, local government) that each use a different addressing scheme. In the drawing, the different "addresses" or address designators as labeled A through D. For example, B identifies the designator "61 B 99S". The list of those designators and whatever means each service uses to tell where that delivery point is located physically is called their "database". For example, a data supplier may use global position (latitude, longitude), or GPS data to specify the physical location. The meta-database will link, for each physical delivery point, the address designators in all relevant databases to the canonical address designator, as further explained below.

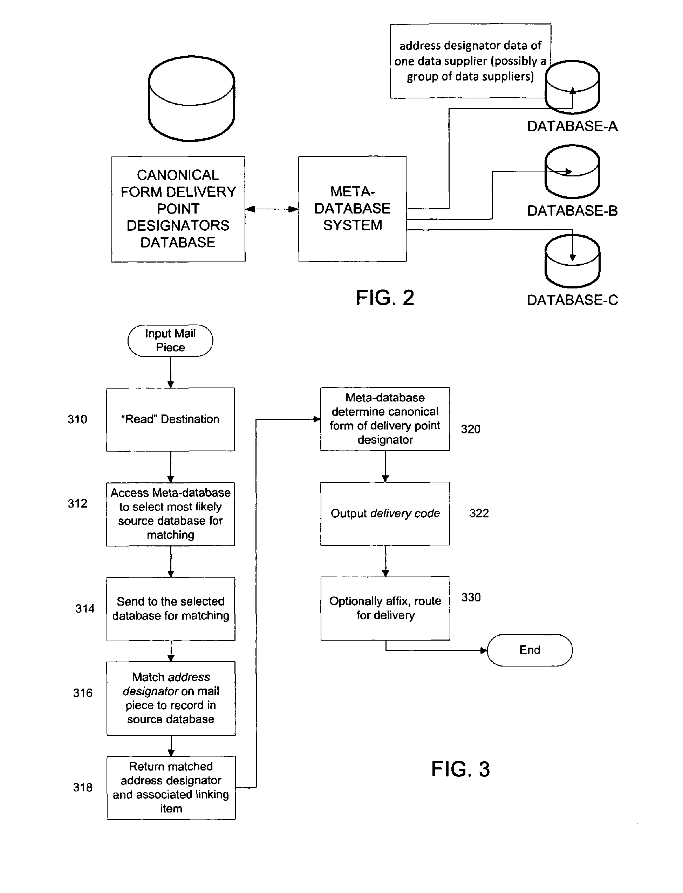

Figure 2 is a simplified functional block diagram of a novel *directory system* in accordance with an embodiment of the present disclosure, showing three databases (labeled A,B, and C), each containing address designator data provided by (or derived from) a corresponding data supplier (e.g. a utility or local government agency). A meta-database system 200 contains pointers or links across the multiple databases A,B,C to associate a single canonical address designator to each delivery point. A digital electronic database 220 stores delivery point designators in canonical form. Thus the meta-database 200 links a canonical designator of database 220 to each address designator for that delivery point in the individual address designator databases A, B, C. The linking process is discussed in more detail below.

There are two different functionalities here: one during directory *building* or set-up (where the meta-database system performs the linking of each address designator in each supplier database with the canonical designator for that delivery point), and one during directory *operation* (where the directory system determines which address designator in which database has been found on the envelope or package and outputs a code representing the canonical form of the delivery point designator.

Processing and delivery of envelopes and packages is one application of the present disclosure, but this system could work equally well for address cleanup (as mentioned later the section on converting from a chaotic addressing scheme to a standardized one), or for an online application where users type in their address as part of, say, an authentication process. Various embodiments thus may have the following functions and advantages: determine which address designator in which database is meant (i.e. do a possibly fuzzy match between what is found on the package and what is in the database), clean it up, determine the canonical form of the address designator (for the meta-database), and output the delivery code for the package.

The "canonical" form of the data can exist in any of several forms. In the simplest form it may just be a code such as a delivery point ZIP code that is not necessarily human-readable but that tells a delivery system how to deliver the item. The canonical form may be the geo-position of the delivery location, say the latitude and longitude to sufficient accuracy to allow delivery. It may be the official government designator for that address (e.g. in countries like Costa Rica that are trying to standardize their addressing), or it may simply be one of the existing ways of designating the address. The important thing is that the canonical designator will be used by the system (automatic or manual) to route the mail regardless of what was actually written (or printed) on the item.

A method for building a directory system consistent with the present disclosure comprises the following steps: First, collecting the address designators from each individual data source (e.g. a department store or a utility customer records) into a corresponding database. These individual databases may already exist, say for billing purposes. There is no requirement that each address designator be visibly posted at the delivery point as shown in Fig. 1. Second, creating a database of canonical address designators for each domicile in the country (or desired urban area). And finally, creating a third meta-database that links the individual "designator" databases and connects their contents to the second database in such a way that each delivery point has a single associated canonical address designator, and each designator in each individual data supplier database that refers to that delivery point is linked by the meta-database to that associated canonical designator. The canonical designator may then be used for delivery of the item or service. That delivery designator may be something like a ZIP code or, for places that do not uses such codes, it may be an address in a standard format, for example the Universal Postal Union format.

The present system differs from a standard postal directory (e.g. RAF Technology, Inc.'s *Smart Match®* directory product) in several ways. First, a standard postal directory generally has a single address designator for a single delivery point. Minor variances from that standard form may appear (for example vanity addresses substituting "Beverly Hills" for "Los Angeles"), but the point of the postal address database is to determine which canonical address designator (one per location) is intended by the addressor and producing the postal code for that address.

Here we address a different situation. To start with, there may not exist an "official form" of the address at all. Such was the case universally in Costa Rica until recently. The delivery would be associated in each courier's mind with a different designator, which might have nothing at all to do with what others think of as the address.

Even if there already exists a canonical form of the address designator (e.g. the new addresses assigned by the Costa Rican Postal Service), the designators used by the different couriers may bear no resemblance to it. Unlike with standard postal directories, what is on the envelope and intended as the delivery address may not be any kind of approximation of the official address (if any). The Colombian example above is a clear case of this.

### In Set-up

The databases are collected from multiple sources. Each of those must have both their designator and a linking item, such as a geocode, that will enable the meta-database to link the database designators to the canonical designator. According to one definition, GEOCODE (Geospatial Entity Object Code) is a standardized all-natural number representation format specification for geospatial coordinate measurements that provide details of the exact location of geospatial point at, below, or above the surface of the earth at a specified moment of time. However, we refer to Geocoding more broadly as a process of converting addresses (like "1600 Amphitheatre Parkway, Mountain View, CA" or some other address designator) into geographic coordinates (like latitude 37.423021 and longitude - 122.083739). We refer generically to this linking item, be it a geocode or otherwise, as a "linker." Each courier service, for example, may have used a GPS system when making deliveries and has thereby gathered a database that links their address designators with the physical location of the delivery point. In some embodiments, there may be more than one such linking item. The meta-database knows how to link the address designators in one source database with those in all the other source databases and with the canonical designator that will be used for delivery. Table 1 below is a simple example using a single linker per address descriptor.

**TABLE 1. SOURCE DATABASES**

| SOURCE | DELIVERY POINT DESCRIPTOR | GEOCODE LINKER |
|---|---|---|
| A. Department Store Records | | |
| 001 | | |
| 002 | go 200 meters past the | 11°04'N |
| | Church of the | 85°39'W |
| | Assumption | |
| 003 | | |
| | | |
| B. Tax Authority Records | | |
| 001 | Fourth house north of Church of the Assumption | 11°04'N 85°39'W |
| 002 | | |
| 003 | | |
| C. Telephone Co Records | | |
| 001 | | |
| 002 | | |
| --- | | |
| 009 | 6B-99S | 11°04'N |
| | | 85°39'W |

In Table 1, note that each data supplier has a different description, or address designator, for the same physical location (delivery point), as indicated in the Geocode Linker column.

Separately, the proposed system in a preferred embodiment would have a set of canonical address designators similarly linked to a linking item such as the geocode. Refer to canonical database 220 in Fig. 2 by way of illustration. The canonical designator could be the geocode, a standardized (e.g. government or UPU) form of the delivery point address, a ZIP-like code, or something completely different, provided it is both unique to the delivery point and can tell the delivery system how to deliver the item.

The meta-database then creates a directory for later use that links (using the linking item specified above) all the ways a particular delivery point is designated in the different databases with the canonical designator. Table 2 below shows a simple example. The resulting directory will be used henceforth in "real time". That "directory" still consists of many databases, one for each addressing scheme. It is within the scope of this patent that those real-time databases be the same databases collected from the different delivering entities, or that they be extracted from those databases and stored separately for real-time use.

**TABLE 2. META-DATABASE**

| GEOCODE or other LINKER | LINKS TO SOURCE DATABASES | DELIVERY POINT CODE |
|---|---|---|
| | | |
| | | |
| 11°04'N | <link><A.002> | |
| 85°39'W | <link><B.001> | 32K-05 |
| | <link><C.009> | |
| | | |
| | | |

In Table 2, note that the links to source databases (e.g., <link><B.001>) point to the various source database records in Table 1 that correspond to the same Geocode linker, and thus to the same physical delivery point. All the records for that delivery point are associated to a single canonical designator (32K-05) in the meta-database.

### Operation

Fig. 3 illustrates a process consistent with the present invention for assigning a unique canonical form of address to a mail piece to facilitate delivery. First, a user or a machine reads what is written or printed on a mail piece, package, etc., block **310** - we call this the "found address designator." The meta-database is accessed, block **312,** to determine which of the various source address databases the found address designator is most likely to be from. The meta-database then sends the recognized address to the determined source address database, block **314.**

The meta-database system may use external data as well as data from the package or mail piece to accomplish this determination. For example, it may know that a mail piece is from the electric company because it is told so or reads the return address. In some embodiments, the address designator may be sent to more than one of the databases, for example where more than one database have a high probability of a match.

The selected source (supplier) database(s) matches the found address designator to one or more of its records. Each database preferably is capable of various forms of fuzzy matching, enabling the found address designator to be matched as closely as possible with one of the address designators in a source database. It does so, illustrated as block **316.** (In an alternative embodiment, the meta-database itself may do the fuzzy matching rather than having to rely on the individual databases to do it.) At block **318** of Fig. 3, the selected database then returns to the meta-database system the ***matched address designator*** (as it appears in the source database) and the ***linking item*** associated with it.

In another alternative, the meta-database may have sufficient information to do the linking without requiring the individual databases to have such a linking item. There may be, for example, a mathematical method or algorithm for translating the electric company's designators into the department store's designators without real-time cooperation from either entity.

The meta-database then uses the linking item to identify a corresponding canonical form of delivery point designator, block **320**. The system may also output *a* ***delivery point* code**, block 322. An example is shown above in Table 2. This designator may be used to route the item or deliver the service, block **330**. Optionally, the delivery point code may be affixed to the piece, such as by printing, labeling, etc. in clear print or machine-readable form.

### Address Cleansing

Another aspect of our disclosure comprises address cleansing. In some cases where the source address designators vary as described above, and there is a single "correct" form of the address, that correct form may be used to aggregate the resulting address designators into a "clean" database (which may be the original database, now cleaned up).

Other applications of our disclosure include vanity addresses, address changes (of a domicile), that is multiple address designators across time as well as across mailers and couriers, multiple addressing schemes for a country (e.g. dual Flemish and French addressing in Belgium). This last aspect includes simple dual (or multiple languages) as well as different address block formats used by the speakers of the different language. It also includes modernization (e.g. in China) where older forms of the address are being replaced by modified and simplified forms of the address. Thus one can see in view of the present disclosure various opportunities to leverage and coordinate disparate forms of address designators to determine a single canonical form designator for the corresponding physical delivery point.

The present disclosure also covers cases where addresses may be in different formats or different languages or scripts for the foreigners who send something into the country than for the couriers who deliver the items. In China, for example, addresses may appear most to least local (the US order) or least to most local (the more traditional Chinese order). Packages from outside are more often in the US order, while packages generated within China are more often the other way around.

The proposed system and methods can be used by countries in transition, where the government, for example, is trying to get people to adopt a new universal addressing scheme. In one aspect, features of the present disclosure can be used to clean up address lists. For example, a utility could run each of its delivery addresses through the disclosed directory system, find the postal code associated with the house, use that postal code to find the canonical address for the house (i. e. the new Postal Authority address for the house), and substitute that into their database, cleansing it of the old addresses.

### Further Use Case Examples

### Parcel & Express Market

The parcel shipping business now generates about $125 billion in revenues globally and the demand for international package shipping is expected to grow at 5-6% annually which is nearly twice the rate of projected global GDP growth. This increase in parcel shipment volume will be primarily fueled by growth in B2C and C2C, and will continue to drive the need for most courier, express, and postal carriers to improve delivery times and reduce 1 st time delivery failures. Embodiments of the present disclosure may be used to improve efficiency and reduce parcel delivery errors.

Providing a multiple address verification solution will be required to meet domestic demand as well as international delivery of cross border mail and parcels. High speed mail/parcel sortation machines, as well as mobilized handheld computers which would be used by a courier to induct a letter or parcel at the point of collection, will require access to high quality address data in order to accurately verify delivery point information.

### Retail Market

Another market requiring multiple address verification is in the retail sector. For example in emerging economies such as Brazil, many retailers are required to physically verify the location for every customer requesting credit. Having access to a multiple address verification system would allow the retailer to cross reference customer location data and thus reduce the requirement and expense of physical verification.

### Public Safety

Location based services are critical to public safety and is necessary for first response personnel to effectively perform their job in a timely manner. The ability to correlate physical address data with GPS coordinates using a multiple address verification system would allow dispatch personnel to accurately pinpoint and verify all emergency locations by referencing multiple database sources and also introduce additional information. For example in Columbia, the current national address database typically does not include a postal zip code. In 2009, the local Postal Authority launched a new initiative to develop and assign new zip codes for the entire country. The problem with this initiative is that many people in Columbia have no idea what their new zip code is, and thus would not be able to communicate this very vital information during an emergency.

### An Example of How the Meta-database links to the Individual Databases

The description that follows is meant to be one possible implementation of the linking process introduced above, but implementation is certainly not limited to this description. Persons well versed in the art will be able to determine many different ways of effectively implementing the meta-database and its links to the individual databases. It is important to recognize that many different implementation details will fall within the scope of this disclosure. Nonetheless, it is useful to see how one example of a system consistent with the present disclosure might be implemented.

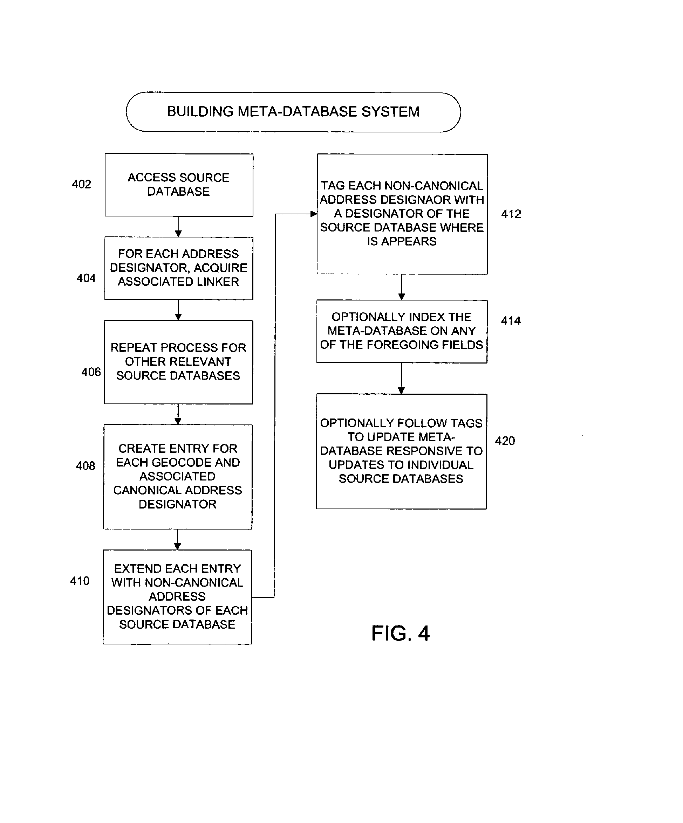

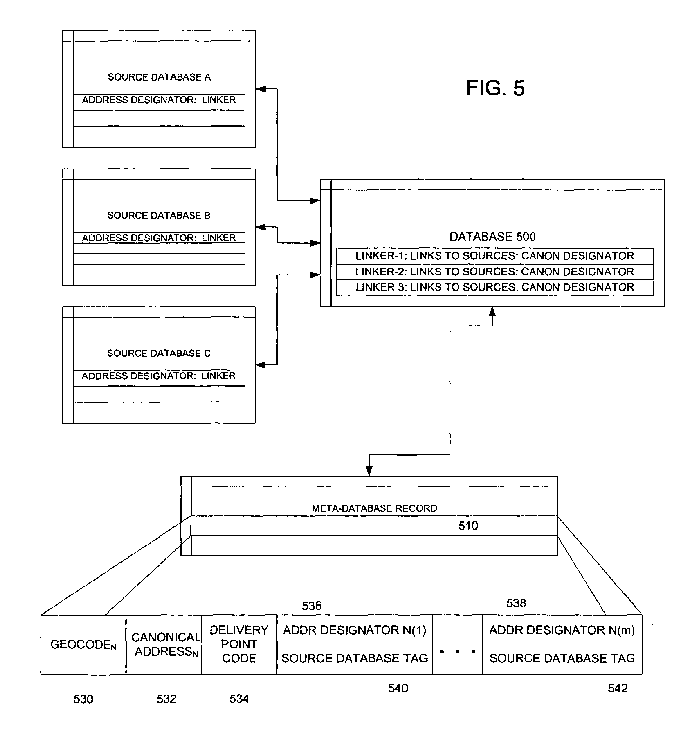

This is first discussed from an implementation perspective, detailing how the database/meta-database system taught by this disclosure could be implemented, and then from an operational perspective to show how it may be used. We refer now to Figures 4 and 5 for illustration.

We assume that each contributor to the system (that is, each courier, electric company, or other entity that has its own address designator for a domicile) has a list of addresses (address designators) that are valid within its system. This list may be implemented in an SQL database for example. We will refer to each contributor's database as a ***source database**.* In Fig. 4, accessing a source database is shown at block **402**. By definition each item in each source database is relevant to the business or other purposes of the corresponding owner of the database, but likely has no use to other such entities. One advantage of our system is to leverage that proprietary data to have use for other entities.

Now, for each item (address designator) in the source database, another item is associated, block **404**. This second item --referred to above as a *l**inker-***must have more general application than just for this courier or company, and will serve as the basis for meta-database linking of the individual source databases. One implementation involves the courier who, upon making delivery to one of the addresses in his database, also captures the location of that domicile using a GPS device, and translates that GPS location into a geocode. That geocode is then entered as an item in the database linked to the delivery address so that the geocode can be used to index the SQL database and retrieve the address or the address can be used to retrieve the geocode.

This procedure is repeated for each courier's database or other source database (either by the courier or by the creator of the meta-database with help from the courier), block 406. At this point, therefore, each database is presumed to be a SQL database with two kinds of linked items: the address as specified by the courier and the geocode of the location. This process is repeated for all participating or relevant source databases, e.g. databases that cover much of the same geographic area or political subdivision; refer to block **406**. Fig. 5 illustrates three such source databases A, B and C.

Next we describe creating a meta-database. The meta-database may also be an SQL database (though any similar database type would work). The meta-database is assembled from multiple sources. First is a database that links geocodes with canonical designators, see DATABASE 500 in Fig. 5. This could be, for example, an SQL database in which each entry comprises a geocode and the official postal delivery code for that geocode. The important consideration is that the geocode will be used during meta-database creation to determine how to link the items in the individual source databases with the canonical form of the address. The canonical form of the address may simply be a postal code that tells the delivery system how to route the item and may not look like an "address" at all.

It is worth stressing again that using a geocode is only one of many possible implementations of a linking item. The only important characteristic of the linking item (or linker) is that it must exist in each source database linked to that courier's method of designating the corresponding address, and it must also exist in a second database or table linking that item with the canonical form of the address (whether an official form, one of the courier address forms, or something else).

In this second database there is a near one-to-one correspondence of the geocode (or other universal designator) with a canonical address¹. That is, under most circumstances the items in this database will consist of one geocode and one canonical address designator. Indeed this database differs from the individual courier databases only in the "official" nature of the address designator. It is, of course, possible that one of the courier databases (e.g. the one belonging to the national postal service or the national census or whatever) will be considered to be this canonical database.
¹ It is conceivable that a building might be big enough to have more than one geocode or that geocode resolution might be too poor to distinguish two addresses physically close together, but those are rare exceptions to the one-to-one rule.

Referring again to Fig. 4, the meta-database is created by storing (in, for example, an SQL database) an entry for each geocode and its associated canonical address designator², see block **408**. Each of those entries is extended by adding the address designator of each courier database (which is available since, as described previously, each courier address has been linked with the geocode for that address within the courier database), block 410.
² It is, of course, perfectly plausible that the geocode may be the canonical designator. In which case, the step of creating the database linking the geocode with the canonical address designator can be skipped.

The end result is a meta-database, conceptually illustrated in Fig. 5, which shows one record or entry **510** in exploded view. Each entry of the meta-database contains a geocode **530** (or other designator common to all the courier databases), a canonical address **532,** and as many non-canonical addresses **(536, 538)** as there are courier databases. Each of those non-canonical addresses may also be tagged with a designator for the source database (**540, 542**), see block **412** in Fig. 4. This tagging has many purposes, including making it easier to update the meta-database when the individual courier database is changed, block **420.**

The meta-database can be indexed, block **414,** by any item (i.e. geocode, canonical address designator, or individual courier address) and all the associated items retrieved for the purposes described above. The above discusses creation of the individual databases and the meta-database.

The following describes one possible use of the meta-database in operation. In this use case it is presumed that a courier is delivering package that has on it an address in some other entity's addressing scheme. He enters the delivery address into the meta-database which uses that address (perhaps after doing some fuzzy matching to correct small errors or variations in the address) to look up the entry associated with that domicile. He then retrieves from the meta-database both the address in his company's format and the geocode. He can then, for example, use the geocode and the appropriate software (outside the scope of this patent) to determine how to get to the domicile to make delivery.

In another use a national postal service can take a package addressed by, say, the local electric company and determine the national postal code for the package, affix that to the package, and thereafter route the package as part of the national postal system.

It will be obvious to those having skill in the art that many changes may be made to the details of the above-described embodiments without departing from the underlying principles of the invention. The scope of the present invention should, therefore, be determined only by the following claims.

## Claims

1. A method for multiple address verification, comprising:
collecting address designators from a plurality of data supplier source databases, the address designators each describing a physical location of a dwelling or building;
for each collected address designator, acquiring an associated linker data item from the corresponding data supplier source database;
for each acquired linker data item, determining a canonical address designator that corresponds to the physical location indicated by the linker data item; and
building a meta-database including the steps of -
creating an entry in the meta-database for each of acquired linker data items;
in the meta-database, associating each linker data item entry with the corresponding canonical address designator; and
in the meta-database, extending each entry to include all of the address designators in the source databases that are associated to the corresponding linker data item.

2. The method of claim 1 and further comprising, in the meta-database, tagging each of the address designators with an identifier of the source database from which the address designator was collected.

3. The method of claim 2 and further including updating the meta-database by following at least one of the address designator identifier tags back to the source database to acquire updated data from the source database.

4. The method of any preceding claim wherein each linker data item comprises a latitude and longitude of the physical location described by associated address designator.

5. The method of any of claims 1 to 4 wherein each linker data item comprises a geocode of the physical location described by associated address designator.

6. A method for routing an item for delivery, comprising:
reading a destination indicated for an item;
selecting a source database most likely to include an address designator that matches the indicated destination;
transmitting the destination to the selected source database for matching;
receiving from the selected source database, responsive to the transmitted destination, a matched address designator together with an associated linking data item;
determining a canonical form of delivery point designator based on the linking data item; and
processing the item for delivery based on the canonical form of delivery point designator.

7. The method of claim 6 wherein the item comprises a mail piece or parcel, and the destination is indicated on the item by handprint or label.

8. The method of claim 7 wherein the item for delivery is a utility service.

9. The method of any of claims 6 to 8 wherein the source database is selected among a plurality of source databases, each source database comprising address designators for a common geographic area.

10. A method of building an electronic database directory system for mail delivery comprising the steps of:
collecting address designators from a plurality of data supplier source databases, the address designators each describing a delivery location in a selected urban area;
accessing a database of canonical address designators for substantially all delivery location in the selected urban area; and
creating a meta-database that links the individual source databases and connects their contents to the canonical address database wherein each delivery location has a single associated canonical address designator, and each address designator in each source database that refers to that delivery point is linked by the meta-database to that associated canonical designator.

11. The method of claim 10 including retrieving an associated linking data item from the source databases, for each collected address designator; and assigning a canonical form of delivery point designator to each collected address designator based on the associated linking data item.

12. A data structure recorded on a computer-readable medium, wherein the data structure comprises a meta-database built as follows:
collecting address designators from a plurality of data supplier source databases, the address designators each describing a physical location of a dwelling or building;
for each collected address designator, acquiring an associated linker data item from the corresponding data supplier source database;
for each acquired linker data item, determining a canonical address designator that corresponds to the physical location indicated by the linker data item; and
building the meta-database including the steps of -
creating an entry in the meta-database for each of acquired linker data items; and associating each linker data item entry with the corresponding canonical address designator.

13. The data structure of claim 12 wherein building the meta-database further comprises extending each entry to include all of the address designators in the source databases that are associated to the corresponding linker data item.

14. The data structure of claim 12 or 13 wherein the data structure is implemented in an SQL database.

15. The data structure of any of claims 12 to 14 and further including tags associated to each of the address designators, wherein each tag designates or points to the source database from which the corresponding address designator was collected.
